# EUROPEAN PATENT APPLICATION

(11) **EP 1 736 594 A2**
(43) Date of publication of application: **27.12.2006**
(21) Application number: 06253212.2
(22) Date of filing: 21.06.2006
(51) Int. Cl.: D06N 7/00, A47G 27/04

(54) **Carpet Underlay**

(30) Priority: 22.06.2005 GB 0512754
(71) Applicant: Brandvulc Tyres Limited, Gillard Way Lee Mill Industrial Estate Ivybridge, Devon PL21 9LN (GB)
(72) Inventor: O'Connell, John, Ivybridge, Devon PL21 0AE (GB)
(74) Representative: Harrison, Ivor Stanley

(57) **Abstract**

A carpet underlay is provided in sheet form, the underlay comprising elements of fibrous material packed and bonded together to form a porous structure defining pathways from one face to the other for passage of air. Preferably, thin sheets of a porous material are applied to at least one surface of the underlay and the elements of the fibrous material comprise long, substantially continuous, strands or filaments coiled or otherwise compressed and bonded together. The fibrous material may comprise a rubber-based compound for example from scrap vehicle tyres.

## Description

This invention relates to carpet underlays, especially for use where the floor on which the carpet is to be laid is provided with underfloor heating means.

Underfloor heating is becoming ever more popular for the heating of rooms, offices or other indoor spaces. Underfloor heating entails the provision of heating by hot water, electricity or hot air below the floor so that is transmitted to the room above by conduction through the floor and convection in the room. However, where the room is carpeted, the carpet underlay (whether provided separately from the carpet itself or as an integral part of the carpet structure) acts as an insulation barrier and adversely affects the efficiency of the heating effect.

It is an object of the present invention to provide a carpet underlay which avoids the above problem.

In one aspect, the present invention provides a carpet underlay in sheet form, the underlay comprising elements of fibrous material packed and bonded together to form a porous structure defining pathways from one face to the other for passage of air.

The fibrous material may comprise a natural or synthetic material, provided that it exhibits sufficient intrinsic strength to prevent its being broken down under the influence of loads transmitted to the underlay through the carpet, such as from people walking on the carpet or furniture resting on the carpet. The material should preferably be resilient, whereby the underlay itself is resiliently compressible but, preferably, maintains the pathways from one face to the other even when compressed.

Preferably, the sheets of underlay according to the invention include, applied to one or both surfaces, relatively thin sheets of an open-weave material or a paper-like material with holes formed therein to allow air to pass through the resulting composite underlay.

The fibrous material may be provided in long, substantially continuous, strands or filaments coiled or otherwise compressed and bonded together or, alternatively, in the form of cropped lengths of fibrous material, the individual lengths being preferably randomly disposed one on another to form a matrix thereof, compressed and bonded together.

Examples of suitable fibrous material include coir as a naturally-occurring material and rubber-based compounds, for example formed from scrap vehicle tyres, as a synthetic compound. The material is preferably provided in the form of elongate shards or staple fibres of length up to, say, approximately 10 cm, the individual elements thereof being arranged to form a resilient pad. The orientation of the fibres or tyre shards will depend on the material and stiffness required.

The elements of fibrous material are preferably bonded together by a polymeric bonding agent such as natural rubber or polyurethane. The bonding agent may be applied by prior mixing with the material in an agitating mixer or it may be sprayed on when the material is formed into a sheet and, thereafter, cured or allowed to cure.

In use, the underlay can be positioned between a floor equipped with underfloor heating means and an overlying carpet, the underlay maintaining the lower surface of the carpet spaced from the floor and providing, through the pathways defined by the porous structure, the ability for heat to be transferred from the floor to the underside of the carpet and, thence, to the space to be heated.

Embodiments of the invention will now be described by way of example with reference to the accompanying drawings, of which:
Figure 1 shows a section through carpet underlay formed from scrap rubber fibres;
Figure 2 is a plan view of the underlay of Figure 1; and
Figure 3 shows the use of coir.

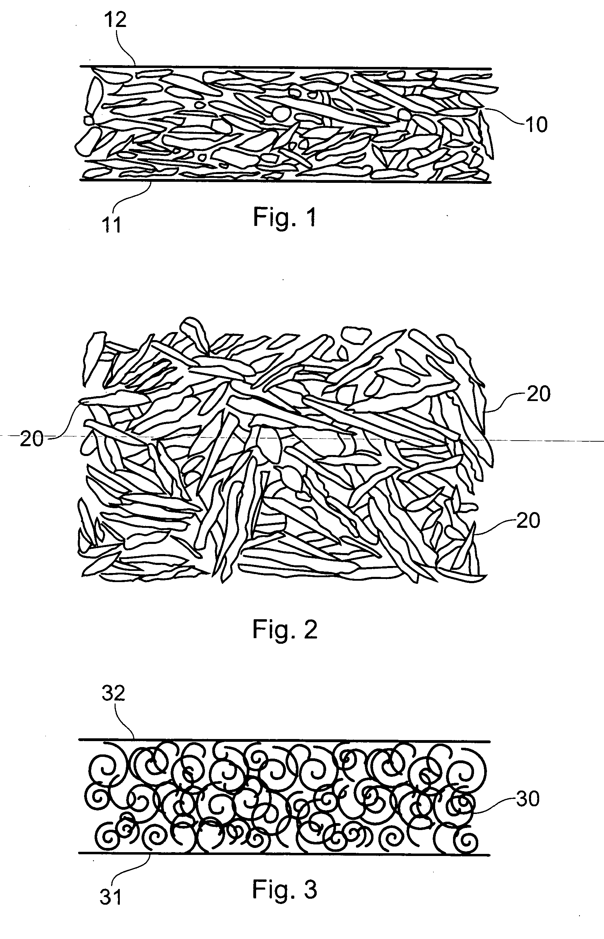

Referring firstly to Fig. 1, the underlay consists of a central core 10 formed of fibres or shards of scrap vehicle tyre rubber compressed and bonded together to provide a resilient matting. As shown also in Fig. 2, individual fibres 20 are disposed with their longitudinal axes disposed generally randomly and oriented in any direction, whether viewed from one side or from above. The upper and lower faces have applied thereto sheets of open-weave hessian material 11, 12 to provide airflow pathways through the entire composite structure.

Figure 3 shows another embodiment, in which the core 30 is formed from loops or coils of coir, preferably intertwined. The upper and lower faces are again formed with an open-weave hessian material 31, 32 in sheet form.

## Claims

1. A carpet underlay in sheet form, the underlay comprising elements of fibrous material packed and bonded together to form a porous structure defining pathways from one face to the other for passage of air.

2. A underlay according to claim 1, including thin sheets of a porous material applied to at least one surface.

3. Underlay according to claim 2, in which the porous material comprises paper.

4. Underlay according to claim 2, in which the porous material comprises an open-weave fabric material.

5. Underlay according to any preceding claim, in which the elements of the fibrous material comprise long, substantially continuous, strands or filaments coiled or otherwise compressed and bonded together.

6. Underlay according to any of claims 1 to 4, in which the elements of fibrous material comprise cropped lengths, the individual lengths being randomly disposed one on another to form a matrix thereof, compressed and bonded together.

7. Underlay according to any preceding claim, in which the fibrous material comprises coir.

8. Underlay according to any of claims 1 to 6, in which the fibrous material comprises a rubber-based compound.

9. Underlay according to claim 8, in which the material is provided in the form of elongate shards or staple fibres of length up to approximately 10 cm.

10. Underlay according to claim 9, in which the fibres are randomly oriented.

11. Underlay according to any preceding claim, in which the elements of fibrous material are bonded together by a polymeric bonding agent.
